# EUROPEAN PATENT APPLICATION

(11) **EP 2 228 611 A1**
(43) Date of publication of application: **15.09.2010**
(21) Application number: 09002418.3
(22) Date of filing: 23.02.2009
(51) Int. Cl.: F24J 2/08, F24J 2/20, F24J 2/50

(54) **Solar panel**

(71) Applicant: Reidy, Neil, Castlebridge Wexford (IE)
(72) Inventor: The designation of the inventor has not yet been filed

(57) **Abstract**

Solar Panel which captures a large amount of concentrated light/heat energy from the sun which is then used to heat a liquid in a flat panel heat collector which is then used to heat water, comprising a flat panel aluminium heat collector and a glass panel which consist of double glazed glass with Fresnel lenses between the panes.

## Description

### Abstract

Current Solar Panel work on the principal of heating liquid within tubes. The liquid is circulated by means of a pump and is used to heat water.

This mechanism has many flaws which are overcome by the Reidy Advanced Solar Panel (RASP)

The Reidy Advanced Solar Panel (RASP) captures a large amount of concentrated light/heat energy from the sun which is then used to heat a liquid in a flat panel heat collector which is then used to heat water.

### Overview

Due to its design the RASP is capable of making more efficient use of the available solar energy and using this in an efficient manner to provide hot water.

### Description

The RASP consists of a flat panel aluminium heat collector with a water or other liquid inlet and a water or other liquid outlet at diagonally opposite ends. It will be covered by the glass panel described below on one face..

The glass panel will consist of double glazed glass with Fresnal lenses between the panes. The Fresnal lenses will be evenly spaces and will focus the light/heat energy of the sun on the heat collector panel. The panel will be filled with some inert gas to provide insulation against heat loss.

The heat collector and glass panel will be enclosed within a metal frame which will be insulated on the sides to minimum heat loss into the surroundings.

The liquid circulating through the heat collector can be either water or some other suitable liquid which will provide a medium for heat transfer from the heat collector to the hot water cylinder.

It is envisaged that the RASP will be manufactured in sizes of 100 cm X 50 cm. Depending upon need other sizes may also be manufactured.

The Fresnal lense size will depend upon the size of the RASP and will range from 1 cm up to 10 cm diameter or more as required. All lenses in a RASP will have the same size.

Note: The sizes of materials used can change to reflect product improvements.

### Applications

The RASP has been designed to be used as an add on heat source to provide hot water at much greater efficiencies than conventional solar panels.

### Choice of Materials

The Materials used must possess following properties:
- Non corroding
- Good conductors of heat
- Lightweight
- Impact Resistant
- Resist Exposure to Elements

### Parts List

- 1: Flat square metal heat collector
- 1: Double glazed glass panel with a number of Fresnal lenses between the panes. The Fresnal lenses are situated next to each other for the whole available area of the glass panel
- 1: Metal frame to house heat collector and glass panel. The frame must be large enough to hold insulating material at the sides and back of the heat collector.

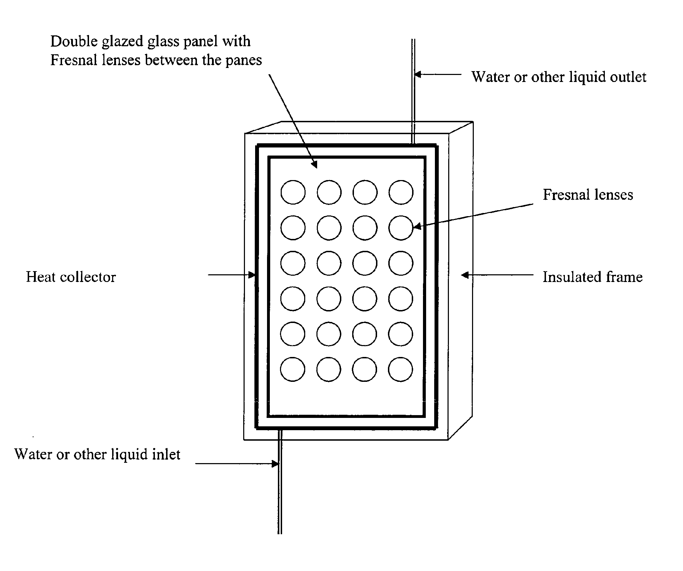

## Claims

1. Thereby claim a patent for RASP1 bearing application no 09002418.3.
Due to its unique design and unconventional application of technology, the RASP device represents a breakthrough in solar water heating technology and will result in greatly increased efficiency over conventional solar panels.
The RASP consists of a flat panel aluminium heat collector with water or other liquid inlet and water or other liquid outlet at diagonally opposite ends. It will be covered by a glass panel (described below) on one face and the other face and sides will be insulated to ensure heat loss is kept to a minimum.
The glass panel will consist of double glazed glass with Fresnel lenses between the panes. The Fresnel lenses will be evenly spaced and will ensure that a large amount of the sun's heat/light energy is focused on the heat collector panel. The double glazed glass will be filled with some inert gas to provide insulation against heat loss.
The whole assembly will be enclosed in a metal frame. It is envisaged that the RASP device will be manufactured in sizes of 100 cm X 50 cm. Depending upon need other sizes may also be manufactured.
The Fresnel lense size will depend upon the size of the RASP device and will range from 1 cm up to 10 cm or even more as required.
